# EUROPÄISCHE PATENTSCHRIFT

(11) **EP 1 767 810 B1**
(45) Veröffentlichungstag und Bekanntmachung des Hinweises auf die Patenterteilung: **10.03.2010**
(21) Anmeldenummer: 06017716.9
(22) Anmeldetag: 25.08.2006
(51) Int. Cl.: F16F 9/348, F16F 9/512

(54) **Dämpfventileinrichtung mit progressivem Dämpfkraftverlauf**
Throttle valve device with progressive damping force characteristics
Dispositf de valve d'amortisseur ayant une évolution progressive de la force d'amortissement

(30) Priorität: 27.09.2005 DE 102005046276
(43) Veröffentlichungstag der Anmeldung: 28.03.2007
(73) Patentinhaber: ThyssenKrupp Bilstein Suspension GmbH, 58256 Ennepetal (DE)
(72) Erfinder: Schmidt, Klaus Dipl.-Ing., 51519 Odenthal (DE)
(74) Vertreter: Adams, Steffen

(56) Entgegenhaltungen:
- DE-A1- 3 932 669
- DE-A1- 4 025 115
- DE-A1- 19 857 068
- DE-A1-102004 050 732

## Beschreibung

Die Erfindung betrifft einen hydraulischen Schwingungsdämpfer gemäß dem Oberbegriff des Patentanspruchs 1.

Ein derartiger Schwingungsdämpfer ist aus der DE 10 2004 050 732 A1 bekannt. Um bei hohen Arbeitskolbengeschwindigkeiten des Schwingungsdämpfers eine hohe Dämpfkraft zu erhalten, ist es wünschenswert, die Ventileinrichtungen des Schwingungsdämpfers so auszulegen, dass bei hohen Arbeitskolbengeschwindigkeiten der Dämpfkraftverlauf mit steigender Arbeitskolbengeschwindigkeit progressiv ansteigt. Die ansteigende Dämpfkraft sorgt dabei dafür, dass die Dämpfergeschwindigkeit vor Erreichen der Endanschläge reduziert wird, um die Anschlagkräfte zu verringern. Mit diesem Anschlagen wären nämlich sowohl mechanischer Verschleiß bzw. Verformungen als auch unerwünschte Geräuschentwicklung während des Fahrbetriebs verbunden.

Um einen mit der Arbeitskolbengeschwindigkeit progressiv ansteigenden Dämpfkraftverlauf zu realisieren, wird in der DE 10 2004 050 732 A1 eine Dämpfventileinrichtung vorgeschlagen, die ein erstes Dämpfventil umfasst, das in einem ersten Betriebsbereich mit steigender Durchströmungsgeschwindigkeit eines Dämpfungsmediums in eine Durchlassbetriebsstellung übergeht, wobei ein zweiter Betriebsbereich mit einer progressiven Dämpfkraftcharakteristik von einer Drosselstelle in Verbindung mit einem Steuerschieber beeinflusst wird, der in eine Schließstellung überführbar ist. Der Steuerschieber weist dabei eine druckbeaufschlagte Fläche auf, die in Abhängigkeit von der Strömungsgeschwindigkeit des Dämpfmediums in Schließrichtung auf den Steuerschieber einwirkt. Bei dieser Lösung ist also zusätzlich zu den Dämpfungsventilen des Arbeitskolbens bzw. des Bodenventils ein separater Steuerschieber notwendig. Dieser separate Steuerschieber wirkt entweder mit dem Körper des Arbeitskolbens oder mit dem Körper des Bodenventils zusammen und bildet mit diesem eine Drosselstelle aus. Der Durchströmungsquerschnitt dieser Drosselstelle verringert sich bei steigender Arbeitskolbengeschwindigkeit, sodass die Dämpfkraft des Schwingungsdämpfers progressiv ansteigt. Wird ein bestimmter kritischer Wert des Durchflussquerschnitts der Drosselstelle erreicht, so steigt der Druck im Schwingungsdämpfer auf einen kritischen Wert an, bei dessen Erreichen ein Druckbegrenzungsventil, das eine so genannte Blow-off-Funktion aufweist, öffnet, sodass der progressive Dämpfkraftanstieg abgebrochen wird und die Dämpfkraft nicht weiter ansteigt, sondern auf dem erreichten hohen Niveau verbleibt.

Nachteilig bei diesem bekannten Schwingungsdämpfer ist, dass die konstruktive Ausgestaltung der Ventileinrichtung aufgrund des erforderlichen separaten Ventilschiebers aufwändig ist und daher auch mit vergleichsweise hohen Kosten verbunden ist. Außerdem erfordert der separate Ventilschieber eine relativ große axiale Bauhöhe für die Ventileinrichtung.

Der Erfindung liegt die Aufgabe zugrunde, einen Schwingungsdämpfer gemäß dem Oberbegriff des Patentanspruchs 1 vorzuschlagen, der konstruktiv einfach aufgebaut ist und bei dem die den progressiven Dämpfkraftverlauf bewirkende Ventileinrichtung eine geringe axiale Bauhöhe aufweist.

Diese Aufgabe wird gemäß der Erfindung mit einem hydraulischen Schwingungsdämpfer mit den Merkmalen des Patentanspruchs 1 gelöst. Vorteilhafte Weiterbildungen der Erfindung sind in den Unteransprüchen angegeben.

Bei der Erfindung wird die variable Drosselstelle, die bei zunehmender Arbeitskolbengeschwindigkeit ihren Durchflussquerschnitt für das Dämpfungsmedium verringert und somit für das progressive Ansteigen des Dämpfkraftverlaufes sorgt, unmittelbar zwischen der die Dämpfkraft während des Normalbetriebs bestimmenden Ventilscheibe einerseits und einer mit dieser Ventilscheibe zusammenwirkenden Ringscheibe andererseits ausgebildet. Unter Normalbetrieb wird in diesem Zusammenhang ein Betriebsbereich verstanden, in dem vergleichsweise geringe Arbeitskolbengeschwindigkeiten von bis zu 2 m/sec, jedoch maximal bis zu 4 m/sec vorliegen. Diese Geschwindigkeitsbereiche sind dabei nicht als feststehende Bereiche zu verstehen, sondern sie sind durch Veränderung der Bauteile einstellbar.

Das eine Blow-off-Funktion aufweisende Druckbegrenzungsventil weist erfindungsgemäß eine der Ventilscheibe des Dämpfungsventils zugeordnete Ringscheibe auf, welche ihrerseits eine der Ventilscheibe zugewandte Oberfläche aufweist. Diese Oberfläche bildet mit der Ventilscheibe eine variable Drosselstelle aus, die bei hohen Arbeitskolbengeschwindigkeiten ab etwa 2 m/sec für einen progressiven Anstieg des Dämpfkraftverlaufes des Schwingungsdämpfers sorgt. Da bei herkömmlichen hydraulischen Schwingungsdämpfern die Ventilscheibe des Dämpfungsventils ohnehin erforderlich ist, um die gewünschte Dämpfungscharakteristik des Schwingungsdämpfers einzustellen, ist lediglich die zusätzliche Ringscheibe, die zu dem Blow-off-Ventil des Schwingungsdämpfers gehört, zur Ausbildung der gewünschten variablen Drosselstelle erforderlich. Ein separates Bauteil im Sinne eines Steuerschiebers, der durch das strömende Dämpfungsmedium betätigt wird (vgl. DE 10 2004 050 732 A1), ist nicht erforderlich. Daher baut die erfindungsgemäße Ventileinrichtung in axialer Richtung sehr klein. Außerdem ist der konstruktive Aufwand zur Realisierung der variablen Drosselstelle ausgesprochen gering, sodass die gesamte Ventileinrichtung konstruktiv einfach ausgebildet und damit kostengünstig ist.

Die erfindungsgemäße Ventileinrichtung, mit der die variable Drosselstelle gebildet wird, kann am Arbeitskolben des Schwingungsdämpfers ausgebildet sein. Handelt es sich um einen Schwingungsdämpfer mit Bodenventil, der nach dem Zweikammer-Wirkprinzip arbeitet, so kann die erfindungsgemäße Ventileinrichtung entweder nur am Arbeitskolben oder nur am Bodenventil oder sowohl am Arbeitskolben als auch am Bodenventil vorgesehen sein.

Die erfindungsgemäße Ventileinrichtung kann vorteilhaft als ausschließlich in der Druckstufe des Schwingungsdämpfers wirksame Ventileinrichtung ausgebildet sein. Es ist allerdings auch denkbar, die erfindungsgemäße Ventileinrichtung als ausschließlich in der Zugstufe des Schwingungsdämpfers wirksame Ventileinrichtung vorzusehen. Ferner ist es auch denkbar, dass die erfindungsgemäße Ventileinrichtung in beiden Bewegungsrichtungen des Arbeitskolbens (also sowohl in der Zug- als auch in der Druckstufe) wirksam ist.

Bei der erfindungsgemäßen Ventileinrichtung kann das Blow-off-Ventil als federbelastetes Druckbegrenzungsventil ausgebildet sein. Bevorzugt umfasst das Blow-off-Ventil einen zylindrischen Mantel mit einem an seiner Innenwandung angeordneten radialen Absatz, der sich nach innen, d.h. zur Mitte des Schwingungsdämpfers hin erstreckt. Dieser Absatz bildet ein Widerlager für die Ringscheibe, die mit der Ventilscheibe die variable Drosselstelle ausbildet.

Um eine geringe axiale Bauhöhe der Ventileinrichtung zu erreichen, ist vorgesehen, dass innerhalb des Mantels und oberhalb des radialen Absatzes eine Federscheibe angeordnet ist, die das Druckbegrenzungsventil in Schließrichtung mit einer vorgebbaren Federkraft vorspannt. Über die Vorspannung, mit der diese Federscheibe innerhalb des Mantels des Druckbegrenzungsventils eingebaut wird, lässt sich festlegen, bei welchem Druck das Druckbegrenzungsventil öffnet, sodass die Blow-off-Wirkung erreicht wird. Alternativ zu der Federscheibe kann selbstverständlich auch eine Schraubenfeder vorgesehen sein oder auch eine Kombination aus Federscheibe und Schraubenfeder.

Die Erfindung macht sich die Erkenntnis zunutze, dass die Öffnungsbewegung der Ventilscheibe, die im Normalbetrieb des Schwingungsdämpfers dessen Dämpfungscharakteristik bestimmt, dazu ausgenutzt werden kann, in Wechselwirkung mit einem Bauteil eines Blow-off Ventils eine variable Drosselstelle auszubilden, mit der im Bereich höherer Arbeitskolbengeschwindigkeiten ein progressiver Dämpfkraftverlauf bei ansteigenden Arbeitskolbengeschwindigkeiten erreicht werden kann. Auf zusätzliche Bauteile, wie beispielsweise Steuerschieber zur Ausbildung dieser variablen Drosselstelle, kann daher verzichtet werden, was zu einem konstruktiv einfachen Aufbau der Ventileinrichtung und somit auch zu geringen Herstellungskosten führt. Außerdem wird eine geringe axiale Bauhöhe der Ventileinrichtung erreicht.

Im Folgenden wird die Erfindung anhand einer Zeichnung näher erläutert. Im Einzelnen zeigen
- Fig. 1: ein Diagramm, in dem der Dämpfkraftverlauf über der Arbeitskolbengeschwindigkeit dargestellt ist;
- Fig. 2a, 2b: eine schematische Darstellung des Wirkprinzips der erfindungsgemäßen Ventileinrichtung;
- Fig. 3: eine erfindungsgemäße Ventileinrichtung am Arbeitskolben in einem ersten Betriebszustand (Normalbetrieb);
- Fig. 4: die Ventileinrichtung gemäß Fig. 3 in einem anderen Betriebszustand (Blow-off-Funktion);
- Fig. 5: ein Bodenventil mit einer erfindungsgemäßen Ventileinrichtung in einem ersten Betriebszustand (Normalbetrieb);
- Fig. 6: die Ventileinrichtung gemäß Fig. 5 in einem anderen Betriebszustand (Blow-off-Funktion).

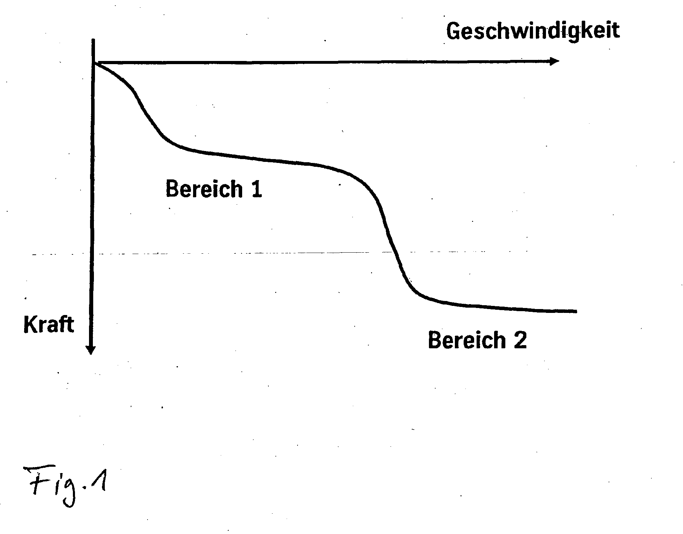

In Fig. 1 ist der Dämpfkraftverlauf eines erfindungsgemäßen Schwingungsdämpfers über der Arbeitskolbengeschwindigkeit aufgetragen. Der mit "Bereich 1" gekennzeichnete Bereich des Dämpfkraftverlaufes ist der Bereich, der im Normalbetrieb des Schwingungsdämpfers bei Arbeitskolbengeschwindigkeiten von bis zu etwa 2 m/sec vorliegt. In diesem Bereich wird die Dämpfkraft des Schwingungsdämpfers durch eine oder mehrere federnde oder federbelastete Ventilscheiben bestimmt. Steigt die Arbeitskolbengeschwindigkeit weiter an, so geht der Dämpfkraftverlauf in gewünschter Weise in einen progressiv ansteigenden Dämpfkraftverlauf über. "Progressiv ansteigender Dämpfkraftverlauf' bedeutet, dass mit ansteigenden Arbeitskolbengeschwindigkeiten auch die Dämpfkraft des Schwingungsdämpfers ansteigt. Auf diese Weise wird die Dämpfergeschwindigkeit vor Erreichen der Endanschläge reduziert, um die Anschlagkräfte zu verringern und die mit einem Anschlagen verbundene Beschädigung und/oder die unerwünschte Geräuschentwicklung zu vermeiden.

Steigt die Arbeitskolbengeschwindigkeit dagegen noch weiter an und erreicht sie einen kritischen Wert, so entfaltet die erfindungsgemäße Ventileinrichtung ihre Blow-off-Funktion, sodass die progressiv ansteigende Kurve des Dämpfkraftverlaufes in den flachen Bereich 2 übergeht, in dem kein nennenswerter Anstieg der Dämpfkraft mehr vorliegt. Auf diese Weise wird die Ausbildung eines zu hohen Druckniveaus innerhalb des Schwingungsdämpfers vermieden, sodass ein Platzen des Schwingungsdämpfers verhindert wird. Gleichzeitig wird ein hohes Dämpfkraftniveau des Schwingungsdämpfers aufrechterhalten.

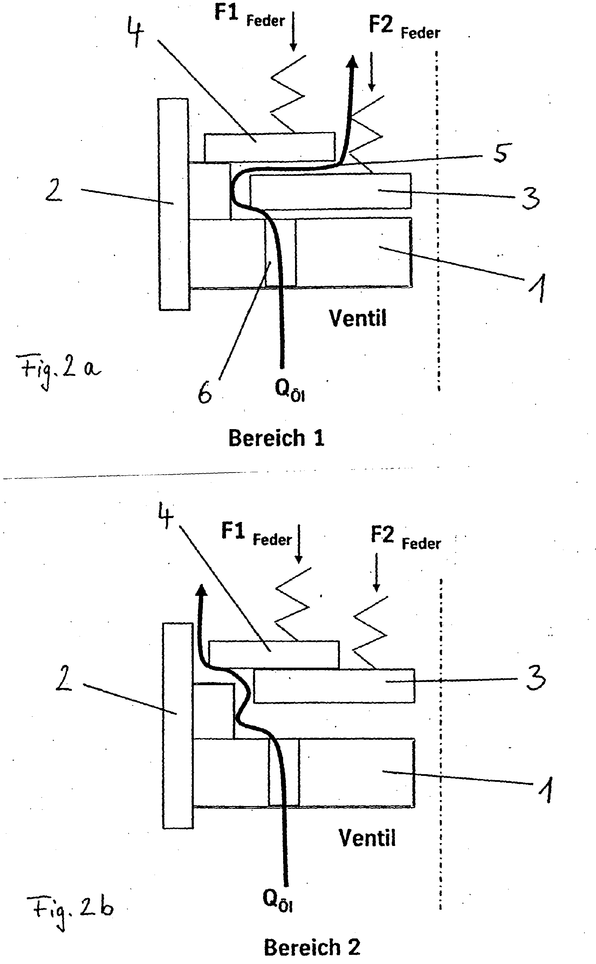

In Fig. 2a ist das Funktionsprinzip der erfindungsgemäßen Ventileinrichtung schematisch während des Normalbetriebs dargestellt. Zu erkennen ist der Arbeitskolben 1, der in einem Behälterrohr 2 eines Schwingungsdämpfers oszillierend bewegbar geführt angeordnet ist. Mit dem Arbeitskolben 1 wirkt eine mit einer Federkraft F2_{Feder} belastete Ventilscheibe 3 zusammen, die mit einem am Körper des Arbeitskolbens 1 ausgebildeten Ventilsitz zusammenwirkt. Diese federbelastete Ventilscheibe 3 bildet das in dem in Fig. 2a dargestellten Kompressionshub des Dämpfers in der Druckstufe wirksame Dämpfungsventil.

Ferner ist ein durch eine zweite Federkraft F1_{Feder} belastetes Druckbegrenzungsventil 4 dargestellt, welches ebenfalls mit einer Ventilsitzfläche am Körper des Arbeitskolbens 1 zusammenwirkt und in Fig. 2a in geschlossenem Zustand dargestellt ist. Zwischen der Ventilscheibe 3 und dem Druckbegrenzungsventil 4 ist eine variable Drosselstelle 5 ausgebildet, durch die im in Fig. 2 dargestellten Normalbetriebszustand das flüssige Dämpfungsmedium hindurchströmt.

Abhängig von der Größe der durchströmbaren Querschnittsfläche der variablen Drosselstelle 5 verändert sich die Dämpfkraft des Schwingungsdämpfers. Einerseits öffnet die Ventilscheibe 3 erst dann, wenn der Druck im Schwingungsdämpfer so groß ist, dass die vom Dämpfungsmedium auf die Ventilscheibe 3 einwirkende Kraft größer ist als die durch die Feder F2 auf die Ventilscheibe einwirkende Federkraft F2_{Feder}. Hat sich aufgrund eines entsprechenden Druckanstieges im Schwingungsdämpfer die Ventilscheibe 3 angehoben, so durchströmt das flüssige Dämpfungsmedium den Durchflusskanal 6 des Arbeitskolbens und die sich daran anschließende variable Drosselstelle 5, die zwischen der Ventilscheibe 3 und dem Druckbegrenzungsventil 4 ausgebildet ist. Steigt die Geschwindigkeit des Arbeitskolbens weiter an, so steigt auch der Druck im Schwingungsdämpfer weiter an, wodurch die Ventilscheibe 3 weiter gegen ihre Federkraft auf das Blow-off Ventil 4 zu bewegt wird und sich die freie, durchströmbare Querschnittsfläche der Drosselstelle 5 weiter verringert. Auf diese Weise steigt die Dämpfkraft des Schwingungsdämpfers mit zunehmender Verringerung der frei durchströmbaren Querschnittsfläche der Drosselstelle 5 weiter an, so dass der gewünschte progressive Dämpfkraftverlauf erreicht wird.

Sobald der frei durchströmbare Querschnitt der Drosselstelle 5 ein kritisches Maß erreicht, bei dem die Drosselstelle 5 einen bestimmten kritischen Strömungswiderstand aufweist, so erreicht der Druck im Schwingungsdämpfer ebenfalls einen kritischen Wert, bei dem das Druckbegrenzungsventil 4 öffnet, sodass die Blow-off-Funktion dieses Druckbegrenzungsventils 4 einsetzt. In Fig. 2b ist dies schematisch dadurch dargestellt, dass die Ventilscheibe 3 sich an das Druckbegrenzungsventil 4 angelegt hat und das Druckbegrenzungsventil 4 sich infolge des Druckanstiegs vom Körper des Arbeitskolbens 1 abgehoben hat, sodass ein Durchflusskanal (Blow-off Kanal) für das flüssige Dämpfungsmedium freigemacht wird. In diesem Betriebszustand steigt der Dämpfkraftverlauf des Schwingungsdämpfers nicht weiter an, sondern er bleibt auf einem hohen Dämpfkraftniveau nahezu konstant. Auf diese Weise wird ein Überschreiten eines kritischen Wertes des Schwingungsdämpferdrucks und damit ein Platzen des Schwingungsdämpfers vermieden.

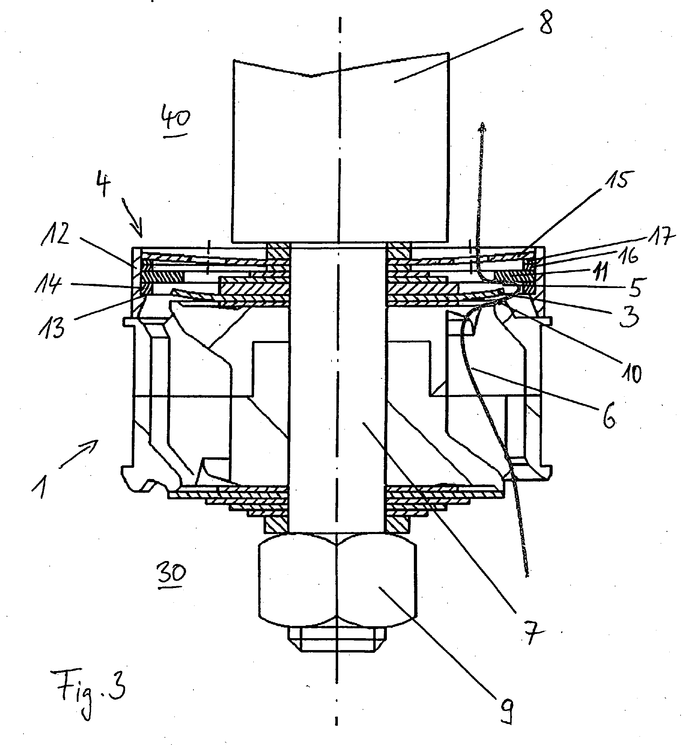

In Fig. 3 ist ein mit einer erfindungsgemäßen Ventileinrichtung ausgestatteter Arbeitskolben 1 dargestellt, der an einem im Durchmesser reduzierten Kolbenstangenzapfen 7 einer Kolbenstange 8 angeordnet ist. Der Arbeitskolben 1 ist dabei in ansich bekannter Weise mit einer Mutter 9 auf dem Kolbenstangenzapfen 7 festgeschraubt. Der Arbeitskolben 1 weist einen Durchflusskanal 6 für das flüssige Dämpfungsmedium auf. Der Durchflusskanal 6 ist dabei durch eine Ventilscheibe 3 abdeckbar, die mit einem am Körper des Arbeitskolbens 1 ausgebildeten Ventilsitz 10 zusammenwirkt. Diese Ventilscheibe 3 bestimmt im in der Fig. 3 dargestellten Normalbetriebszustand die Dämpfkraft des Arbeitskolbens in der Druckstufe. Die Ventilscheibe 3 ist in ansich bekannter Weise durch ein Federscheibenpaket abgestützt, welches sich in axialer Richtung nach oben zur Kolbenstange hin an dem radialen Absatz der Kolbenstange abstützt. Auf diese Weise ist die Ventilscheibe 3 mit einer vorgebbaren Federkraft vorbelastet, sodass die Ventilscheibe 3 erst bei Erreichen eines bestimmten Drucks sich vom Ventilsitz 10 abhebt und einen Durchflusskanal für das flüssige Dämpfungsmedium freigibt. In Fig. 3 ist ein den Strömungspfad des Dämpfungsmediums während eines Kompressionshubes im Normalbetrieb angebender Pfeil eingezeichnet.

In Fig. 3 ist ebenfalls zu erkennen, dass die Ventilscheibe 3 mit einer Ringscheibe 11 des Blow-off Ventils 4 zusammenwirkt. Je weiter die Ventilscheibe 3 in Richtung Kolbenstange aufgebogen wird, desto geringer wird der frei durchströmbare Querschnitt der zwischen der Ventilscheibe 3 und der Ringscheibe 11 ausgebildeten Drosselstelle 5. Durch die Veränderung der frei durchströmbaren Querschnittsfläche der Drosselstelle 5 wird eine entsprechende Veränderung des Dämpfkraftverlaufes des Schwingungsdämpfers erreicht. Mit zunehmender Verringerung der frei durchströmbaren Querschnittsfläche der Drosselstelle 5 steigt die Dämpfkraft des Schwingungsdämpfers an. Auf diese Weise wird der gewünschte progressive Dämpfkraftverlauf im Bereich hoher Arbeitskolbengeschwindigkeiten erreicht.

Das Druckbegrenzungsventil 4 mit der Blow-off-Funktion (Blow-off-Ventil) ist in dem in der Fig. 3 dargestellten Ausführungsbeispiel durch mehrere Bauteile gebildet. Zum einen ist ein Mantel 12 vorgesehen, der mit dem Körper des Arbeitskolbens 1 zusammenwirkt. Am Arbeitskolben 1 ist eine umlaufende Dichtfläche ausgebildet, auf der der Mantel 12 des Blow-off-Ventils 4 dichtend aufsetzt.

An der Innenwandung des Mantels 12 ist ein sich in radialer Richtung nach innen erstreckender Absatz 13 vorgesehen. An diesem radialen Absatz 13 stützt sich die Ringscheibe 11 über einen Distanzring 14 in axialer Richtung ab. Durch die gezielte Auswahl der axialen Dicke des Distanzringes 14 lässt sich der Verlauf des progressiven Anstiegs der Dämpfkraft des Schwingungsdämpfers beeinflussen, da über den Distanzring 14 der maximale Abstand der der Ventilscheibe 3 zugewandten Oberfläche der Ringscheibe 11 von der Ventilscheibe 3 in geschlossenem Zustand vorgebbar ist.

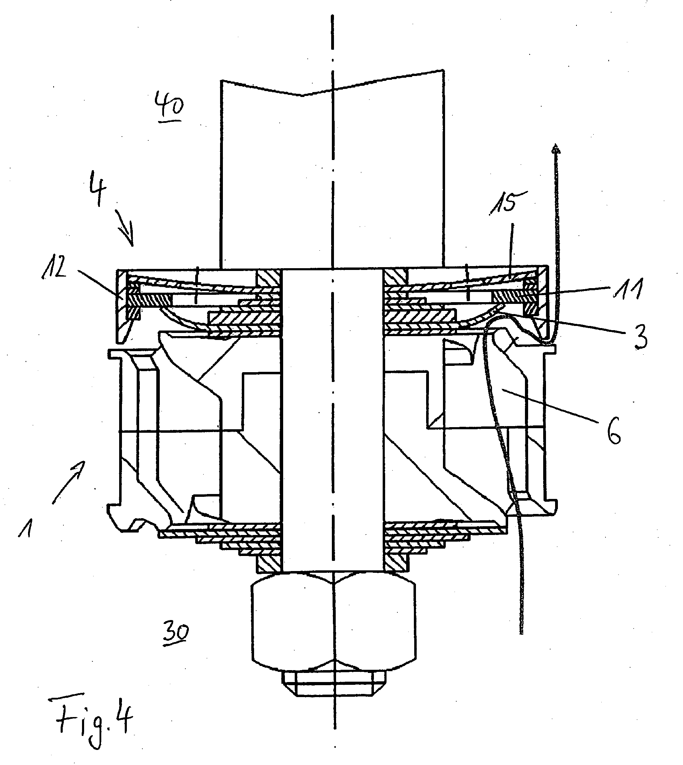

Der Mantel 12 des Blow-off-Ventils 4 wird durch eine von einer Federscheibe 15 erzeugte Federkraft auf dem Arbeitskolben 1 unter Vorspannung gehalten. Diese Federkraft entspricht der in Fig. 2a, 2b mit F1_{Feder} bezeichneten Federkraft. Zur Erzeugung dieser Vorspannung ist die Federscheibe 15 an ihrem inneren radialen Umfang im Bereich des Kolbenstangenzapfens 7 fest axial eingespannt, während sie an ihrem äußeren Umfang auf zwei übereinander angeordneten Distanzscheiben 16, 17 aufliegt. Der Auflagepunkt, der Federscheibe 15 am äußeren Umfang (d.h. im Bereich des Mantels 12) liegt dabei näher zur Kolbenstange 8 hin als der Punkt, an dem die Federscheibe 15 im Bereich des Kolbenstangenzapfens 7 fixiert gehalten ist. Auf diese Weise ist die Federscheibe 15 durchgebogen, sodass sie eine in Schließrichtung des Blow-off-Ventils 4 wirkende Federkraft über die Distanzscheiben 17, 16, die Ringscheibe 11 und den Distanzring 14 auf den Mantel 12 ausübt. Diese Vorspannung hält das Blow-off-Ventil 4 in einer geschlossenen Position auf dem entsprechenden Ventilsitz des Arbeitskolbens 1 fest. Erst wenn ein bestimmtes, von der Durchbiegung dieser Federscheibe 15 abhängiger Druck im Schwingungsdämpfer erreicht wird, so öffnet das Blow-off-Ventil 4 gegen die Federkraft der Federscheibe 15 und gibt den in Fig. 4 mit einem Pfeil dargestellten Strömungspfad für das flüssige Dämpfungsmedium frei. Durch Veränderung der axialen Höhe der übereinander angeordneten Distanzscheiben 16, 17 kann die Vorspannkraft des Blow-off Ventils und damit dessen Öffnungsdruck gezielt eingestellt werden.

In Fig. 4 ist eine maximale Durchbiegung der Ventilscheibe 3 dargestellt, in der die Drosselstelle 5 (vgl. Fig. 3) auf Null verringert ist. Dies soll schematisch darstellen, dass die Durchbiegung der Ventilscheibe 3 ein kritisches Maß erreicht hat, bei dem der freie Durchflussquerschnitt der Drosselstelle 5 (siehe Fig. 3) ein so geringes Maß erreicht hat, dass die Drosselwirkung der Drosselstelle 5 so groß ist, dass im Schwingungsdämpfer ein kritischer Druck erreicht wird, bei dem das Blow-off Ventil 4 öffnet. Dies kann auch schon vor dem physischen Anliegen der Ventilscheibe 3 an der Ringscheibe 11 der Fall sein. Um den Öffnungsdruck des Blow-off Ventils zu erreichen ist es also nicht erforderlich, dass sich die Ventilscheibe 3 an die Ringscheibe 11 anlegt.

Ist dieses kritische Druckniveau im Stoßdämpfer erreicht, so hebt sich der Mantel 12 von seiner Ventilsitzfläche am Arbeitskolben 1 ab und gibt einen Strömungspfad für das flüssige Dämpfungsmedium frei (Blow-off-Funktion).

Wird diese Blow-off-Funktion des Druckbegrenzungsventils 4 ausgelöst, so wird dadurch ein weiterer Anstieg der Dämpfkraft verhindert und das Dämpfkraftniveau des Schwingungsdämpfers bleibt auf hohem Niveau etwa konstant aufrechterhalten, vgl. Bereich 2 in Fig. 1.

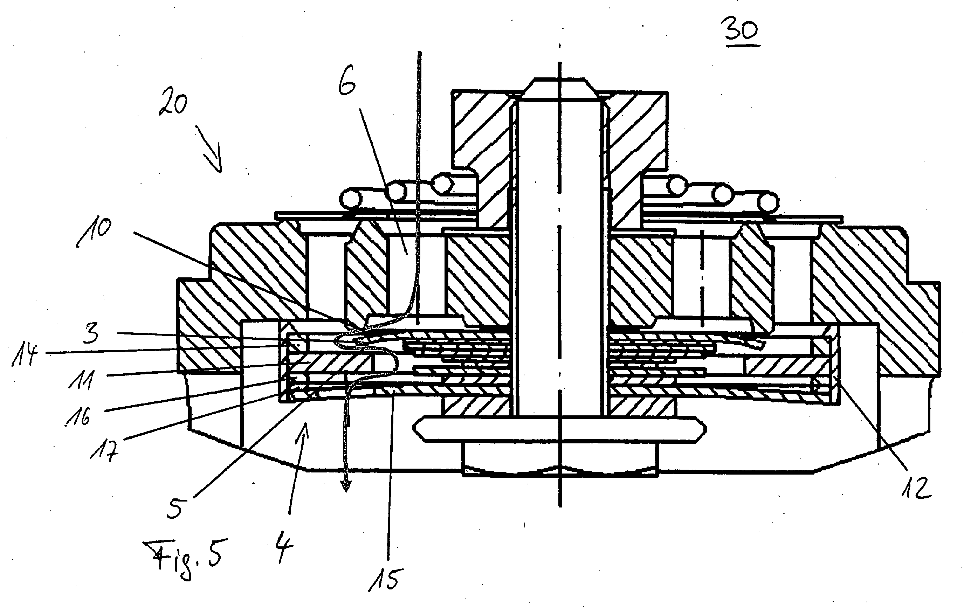

In Fig. 5 ist dasselbe Wirkprinzip der erfindungsgemäßen Ventileinrichtung dargestellt, wie dies in Fig. 3 am Beispiel einer am Arbeitskolben 1 ausgebildeten Ventileinrichtung dargestellt ist. Der Unterschied besteht lediglich darin, dass in Fig. 5 eine an einem Bodenventil 20 ausgebildete erfindungsgemäße Ventileinrichtung dargestellt ist. Gleiche Bauteile sind daher in Fig. 5 mit denselben Bezugszeichen bezeichnet.

Bei dem in Fig. 5 dargestellten Normalbetriebszustand ist ebenfalls, genauso wie in Fig. 3, die erfindungsgemäße Ventileinrichtung so angeordnet, dass sie einen Durchflusskanal 6 abdeckt, welcher bei einer Bewegung des Arbeitskolbens 1 in Richtung Druckraum 30 von flüssigem Dämpfungsmedium durchströmt wird (Kompressionshub). Die Ventilscheibe 3 ist entgegen ihrer Vorspannkraft um ein gewisses Maß vom Ventilsitz 10 abgehoben, sodass flüssiges Dämpfungsmedium durch den Kanal 6 an der Ventilscheibe 3 vorbei und durch den frei durchströmbaren Querschnitt der Drosselstelle 5 hindurch strömt. Zwischen der Ventilscheibe 3 und der Ringscheibe 11 ist wiederum die variable Drosselstelle 5 ausgebildet, durch deren Veränderung der gewünschte progressive Dämpfkraftverlauf bei hohen Arbeitskolbengeschwindigkeiten erreicht wird.

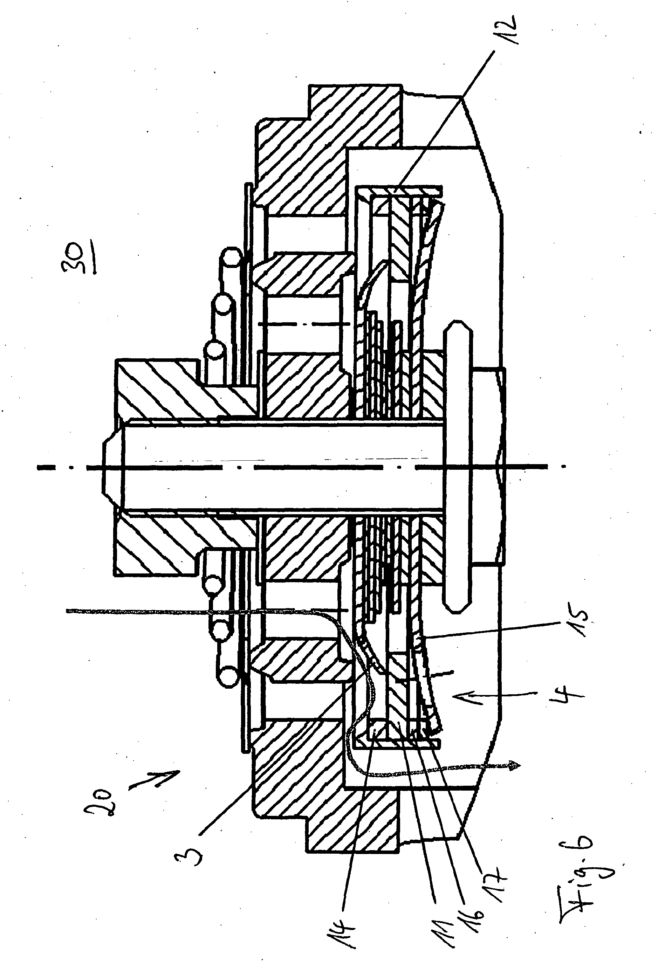

In Fig. 6 ist das mit der erfindungsgemäßen Ventileinrichtung bestückte Bodenventil 20 gemäß Fig. 5 in einem anderen Betriebszustand dargestellt. Die Ventilscheibe 3 hat sich soweit durchgebogen, dass der frei durchströmbare Querschnitt der Drosselstelle 5 (Fig. 5) auf Null abgesunken ist. Der Druck im Schwingungsdämpfer ist dadurch auf ein kritisches Niveau angestiegen, bei dem der Mantel 12 des Blow-off-Ventils 4 von der auf dem Körper des Bodenventils 20 ausgebildeten Ventilsitzfläche abgehoben ist. Dadurch wird ein Strömungsweg für das flüssige Dämpfungsmedium freigegeben, sodass ein weiterer Anstieg der Dämpfkraft bei noch höheren Arbeitskolbengeschwindigkeiten wirksam vermieden wird. Die Dämpfkraft verbleibt in nahezu konstanter Weise auf einem bestimmten hohen Dämpfkraftniveau.

Die erfindungsgemäße Ventileinrichtung kann ausschließlich am Arbeitskolben 1 des Schwingungsdämpfers ausgebildet sein, wie dies in den Fig. 3 und 4 dargestellt ist. Genauso kann die erfindungsgemäße Ventileinrichtung aber auch ausschließlich am Bodenventil 20 angeordnet sein, sowie dies in den Fig. 5 und 6 dargestellt ist. Selbstverständlich ist es auch möglich, die erfindungsgemäße Ventileinrichtung sowohl am Arbeitskolben 1 als auch gleichzeitig am Bodenventil 20 vorzusehen.

In dem in der Zeichnung dargestellten Ausführungsbeispiel ist die erfindungsgemäße Ventileinrichtung jeweils so angeordnet, dass sie in der Druckstufe des Schwingungsdämpfers wirksam ist. In analoger Weise könnte die erfindungsgemäße Ventileinrichtung jedoch auch so angeordnet sein, dass sie in der Zugstufe des Schwingungsdämpfers wirksam ist. Darüber hinaus wäre es auch denkbar, die erfindungsgemäße Ventileinrichtung jeweils sowohl in der Zugstufe als auch in der Druckstufe anzuordnen.

### Bezugszeichenliste

- 1.: Arbeitskolben
- 2.: Behälterrohr
- 3.: Ventilscheibe
- 4.: Druckbegrenzungsventil (Blow-off-Ventil)
- 5.: Drosselstelle
- 6.: Durchflusskanal
- 7.: Kolbenstangenzapfen
- 8.: Kolbenstange
- 9.: Mutter
- 10.: Ventilsitz
- 11.: Ringscheibe
- 12.: Mantel
- 13.: Absatz
- 14.: Distanzring
- 15.: Federscheibe
- 16.: Distanzscheibe
- 17.: Distanzscheibe
- 20.: Bodenventil
- 30.: Druckraum
- 40.: Zugraum
- F1_{Feder}: Federkraft
- F2_{Feder}: Federkraft

## Patentansprüche

1. Hydraulischer Schwingungsdämpfer
a) mit einem Behälterrohr (2), einer einseitig in das Behälterrohr (2) hineinragenden und in diesem oszillierend bewegbaren Kolbenstange (8), an deren dem Behälterrohr (2) zugewandten Ende ein in Zug- und Druckrichtung wirksame Durchflusskanäle für die Dämpfungsflüssigkeit aufweisender Arbeitskolben (1) angeordnet ist, der den Behälterrohrinnenraum in einen kolbenstangenseitigen Zugraum (40) und einen kolbenstangenfernen Druckraum (30) unterteilt, wobei mindestens ein erster Durchflusskanal (6) zur Bildung eines Dämpfungsventils mit einer ersten federnden oder federbelasteten Ventilscheibe (3) abdeckbar ist, die mit einem ersten Ventilsitz (10) zusammenwirkt,
b) mit einem eine Blow-off-Funktion aufweisenden Druckbegrenzungsventil (4) (Blow-off-Ventil), welches bei Erreichen eines vorgebbaren Druckniveaus öffnet,
c) und mit einer eine mit steigender Kolbengeschwindigkeit progressiv verlaufende Dämpfkraft erzeugenden ersten Drosselstelle (5), deren Drosselquerschnitt in Abhängigkeit von der Kolbengeschwindigkeit des Schwingungsdämpfers variabel ist, **dadurch gekennzeichnet, dass**
d) das die Blow-off-Funktion aufweisende Druckbegrenzungsventil (4) eine der ersten Ventilscheibe (3) zugeordnete erste Ringscheibe (11) mit einer der ersten Ventilscheibe (3) zugewandten Oberfläche aufweist, welche mit der ersten Ventilscheibe (3) die variable erste Drosselstelle (5) bildet,
e) und dass das Blow-off-Ventil (4) einen zylindrischen Mantel (12) mit einem an seiner Innenwandung angeordneten, sich nach innen erstreckenden, radialen Absatz (13) aufweist, der ein Widerlager für die Ringscheibe (11) bildet.

2. Schwingungsdämpfer nach Anspruch 1, wobei durch die erste Ventilscheibe (3) mindestens ein Durchflusskanal (6) abdeckbar ist, der bei einer Einfahrbewegung der Kolbenstange (8) in Richtung Druckraum (30) von Dämpfungsflüssigkeit durchströmt wird.

3. Schwingungsdämpfer nach Anspruch 1 oder 2, wobei an dem der Austrittsseite der Kolbenstange (8) gegenüber liegenden Ende des Behälterrohres (2) ein in Zug- und Druckrichtung wirksame Durchflusskanäle (6) für die Dämpfungsflüssigkeit aufweisendes Bodenventil (20) angeordnet ist.

4. Schwingungsdämpfer nach einem der voranstehenden Ansprüchen, wobei die erste Ventilscheibe (3) und das Blow-off-Ventil (4) am Arbeitskolben ausgebildet sind.

5. Schwingungsdämpfer nach Anspruch 3 oder 4, wobei das Bodenventil (20) zur Bildung eines Dämpfungsventils eine zweite federnde oder federbelastete Ventilscheibe (3) und ein dieser zweiten Ventilscheibe (3) zugeordnetes, eine zweite Ringscheibe (11) umfassendes Blow-off-Ventil (4) aufweist, wobei die zweite Ventilscheibe (3) mit der ihr zugewandten Oberfläche der zweiten Ringscheibe (11) eine einen progressiven Anstieg der Dämpfkraft bei steigenden Kolbengeschwindigkeiten bewirkende zweite Drosselstelle (5) bildet.

6. Schwingungsdämpfer nach Anspruch 5, wobei durch die zweite Ventilscheibe (3) mindestens ein Durchflusskanal (6) abdeckbar ist, der bei einer Einfahrbewegung der Kolbenstange (8) in Richtung Druckraum (30) von Dämpfungsflüssigkeit durchströmt wird.

7. Schwingungsdämpfer nach einem der voranstehenden Ansprüchen, wobei das Blow-off-Ventil (4) als federbelastetes Druckbegrenzungsventil ausgebildet ist.

8. Schwingungsdämpfer nach einem der vorhergehenden Ansprüche, wobei innerhalb des Mantels (12) und oberhalb des Absatzes (13) eine Federscheibe (15) angeordnet ist, die eine zentrale Bohrung aufweist und im Bereich dieser zentralen Bohrung axial fixiert gehalten ist, während sich die Federscheibe (15) an ihrem äußeren Umfang unter Ausbildung einer in Schließrichtung des Blow-off-Ventils (4) wirkenden Federkraft direkt oder indirekt an dem Absatz (13) abstützt.

9. Schwingungsdämpfer nach Anspruch 8, wobei die mit der Ventilscheibe (3) zusammenwirkende Ringscheibe (11) zwischen der Ventilscheibe (3) und der Federscheibe (15) angeordnet ist.

10. Schwingungsdämpfer nach Anspruch 9, wobei sich die Ringscheibe (11) über mindestens einen Distanzring (14) an dem Absatz (13) des Mantels (12) abstützt.

11. Schwingungsdämpfer nach Anspruch 10, wobei sich die Federscheibe (15) über mindestens einen Distanzring (16, 17), der zwischen der Federscheibe (15) und der Ringscheibe (11) angeordnet ist, an der Ringscheibe (11) abstützt.

12. Schwingungsdämpfer nach einem der voranstehenden Ansprüchen, wobei die Ventilsitzfläche, mit der das Blow-off-Ventil (4) zusammenwirkt, am Körper des Arbeitskolbens (1) und/oder am Körper des Bodenventils (20) ausgebildet ist.

## Claims

1. Hydraulic vibration damper
a) having a reservoir pipe (2), a piston rod (8) which protrudes at one end into the reservoir pipe (2) and can move therein in an oscillating manner, at the end of which piston rod closest to the reservoir pipe (2) a working piston (1) is disposed which has through-flow ducts for the damping fluid, which are effective in the traction and compression direction, which working piston divides the reservoir pipe internal space into a traction chamber (40) at the piston rod side and a pressure chamber (30) remote from the piston rod, wherein at least one first through-flow duct (6) can be covered with a first resilient or spring-loaded valve disc (3) in order to form a damping valve, which valve disc cooperates with a first valve seat (10),
b) having a pressure limiting valve (4) comprising a blow-off function (blow-off valve), which opens when a preset pressure level is reached,
c) and having a first throttle point (5) producing a damping force which develops progressively as the piston speed increases, the throttle cross-section of which throttle point varies in dependence upon the piston speed of the vibration damper, **characterised in that**
d) the pressure limiting valve (4) comprising the blow-off function has a first annular disc (11), which is allocated to the first valve disc (3) and has a surface facing the first valve disc (3), which surface forms the variable first throttle point (5) with the first valve disc (3),
e) and that the blow-off valve (4) has a cylindrical casing (12) with an inwardly-extending radial shoulder (13) which is disposed on its inner wall and forms a counter bearing of the annular disc (11).

2. Vibration damper as claimed in claim 1, wherein at least one through-flow duct (6) can be covered by the first valve disc (3) and has damping fluid flowing through it during inwards movement of the piston rod (8) in the direction of the pressure chamber (30).

3. Vibration damper as claimed in claim 1 or 2, wherein on the end of the reservoir pipe (2) opposite the exit side of the piston rod (8) there is disposed a base valve (20) having through-flow ducts (6) for the damping fluid, which are effective in the traction and compression direction.

4. Vibration damper as claimed in any one of the preceding claims, wherein the first valve disc (3) and the blow-off valve (4) are formed on the working piston.

5. Vibration damper as claimed in claim 3 or 4, wherein in order to form a damping valve the base valve (20) has a second resilient or spring-loaded valve disc (3) and a blow-off valve (4) allocated to this second valve disc (3) and comprising a second annular disc (11), wherein with the surface of the second annular disc (11) facing it the second valve disc (3) forms a second throttle point (5) causing a progressive increase in the damping force as the piston speeds increases.

6. Vibration damper as claimed in claim 5, wherein at least one through-flow duct (6) can be covered by the second valve disc (3), which through-flow duct has damping fluid flowing through it during inwards movement of the piston rod (8) in the direction of the pressure chamber (30).

7. Vibration damper as claimed in any one of the preceding claims, wherein the blow-off valve (4) is formed as a spring-loaded pressure-limiting valve.

8. Vibration damper as claimed in any one of the preceding claims, wherein within the casing (12) and above the shoulder (13) a resilient disc (15) is disposed which has a central bore and is held in an axially fixed manner in the region of this central bore, while the resilient disc (15) is supported at its outer periphery directly or indirectly on the shoulder (13), thus creating a resilient force acting in the closing direction of the blow-off valve (4).

9. Vibration damper as claimed in claim 8, wherein the annular disc (11) cooperating with the valve disc (3) is disposed between the valve disc (3) and the resilient disc (15).

10. Vibration damper as claimed in claim 9, wherein the annular disc (11) is supported via at least one spacer ring (14) on the shoulder (13) of the casing (12).

11. Vibration damper as claimed in claim 10, wherein the resilient disc (15) is supported on the annular disc (11) via at least one spacer ring (16, 17) which is disposed between the resilient disc (15) and the annular disc (11).

12. Vibration damper as claimed in any one of the preceding claims, wherein the valve seat surface with which the blow-off valve (4) cooperates is formed on the body of the working piston (1) and/or on the body of the base valve (20).

## Revendications

1. Amortisseur de vibrations hydraulique
a) avec un tube de chemisage (2), une tige de piston (8) en saillie dans le tube de chemisage (2) et pouvant être mue de manière oscillante dans celui-ci, à l'extrémité orientée vers le tube de chemisage (2) de laquelle est disposé un piston moteur (1), qui, présentant, pour le fluide amortisseur, des canaux de passage actifs dans la direction de traction et de pression, divise l'espace intérieur du tube de chemisage en un espace de traction (40), côté tige de piston, et en un espace de pression (30) éloigné de la tige de piston, au moins un premier canal de passage (6), pour la formation d'une valve d'amortissement, pouvant être recouvert avec un premier disque de valve (3), qui, faisant ressort ou étant soumis à un ressort, coopère avec un premier siège de valve (10),
b) avec une valve de limitation de pression, avec une fonction de décharge (4) (valve "blow-off"), qui ouvre quand est atteint un premier niveau, qui peut être prédéterminé,
c) et avec un premier point d'étranglement (5), qui génère une force d'amortissement évoluant progressivement avec la vitesse croissante du piston, et dont la section transversale d'étranglement varie en fonction de la vitesse du piston de l'amortisseur de vibrations, **caractérisé en ce que**
d) la valve de limitation de pression (4) à fonction "blow-off" présente un premier disque annulaire (11), associé au premier disque de valve (3), avec une surface orientée vers le premier disque de valve (3), qui forme avec ledit premier disque de valve (3), le premier point d'étranglement variable (5),
e) et **en ce que** la valve à fonction "blow-off" (4) présente une gaine cylindrique (12) avec un talon (13) radial, qui, disposé sur sa paroi interne et s'étendant vers l'intérieur, forme une butée pour le disque annulaire (11).

2. Amortisseur de vibrations selon la revendication 1, au moins un canal de passage (6) pouvant être recouvert par le premier disque de valve (3), lequel canal est traversé par le fluide amortisseur lors d'un mouvement de plongée de la tige de piston (8) en direction de l'espace de pression (30).

3. Amortisseur de vibrations selon revendication 1 ou 2, un plateau à valves (20), présentant, pour le fluide amortisseur, des canaux de passage (6) actifs dans la direction de traction et de pression, étant disposé à l'extrémité du tube de chemisage (2), située à l'opposé du côté de sortie de la tige de piston (8).

4. Amortisseur de vibrations selon l'une des revendications précédentes, le premier disque de valve (3) et la valve "blow-off" (4) étant formés sur le piston moteur.

5. Amortisseur de vibrations selon revendication 3 ou 4, le plateau à valves (20) présentant, pour la formation d'une valve d'amortissement, un deuxième disque de valve (3) et une valve "blow-off" (4), qui comprend un deuxième disque annulaire (11) et est associée à ce deuxième disque de valve (3), le deuxième disque de valve (3) formant, avec la surface du deuxième disque annulaire (11) orientée vers lui, un deuxième point d'étranglement (5), qui provoque un accroissement progressif de la force d'amortissement en fonction de l'accélération de la vitesse du piston.

6. Amortisseur de vibrations selon la revendication 5, au moins un premier canal de passage (6), qui est traversé par le fluide d'amortissement, en direction de l'espace de pression (30), lors d'un mouvement de plongée de la tige de piston (8), pouvant être couvert par le deuxième disque de valve (3).

7. Amortisseur de vibrations selon l'une des revendications précédentes, la valve "blow-off" (4) étant réalisée sous la forme d'une valve de limitation de pression soumise à un ressort.

8. Amortisseur de vibrations selon l'une des revendications précédentes, une rondelle élastique (15) étant disposée à l'intérieur de la gaine (12) et au-dessus du talon (13), ladite rondelle élastique présentant un alésage central, et étant maintenue fixement dans la direction axiale dans la zone de cet alésage central, tandis que la rondelle élastique (15), sur son pourtour extérieur, s'appuie directement ou indirectement sur le talon (13), en développant une force élastique, qui agit dans la direction de fermeture de la valve "blow-off" (4).

9. Amortisseur de vibrations selon la revendication 8, le disque annulaire (11), qui coopère avec le disque de valve (3), étant disposé entre le disque de valve (3) et la rondelle élastique (15).

10. Amortisseur de vibrations selon la revendication 9, le disque annulaire (11) prenant appui sur le talon (13) de la gaine (12) par l'intermédiaire d'au moins une bague d'écartement (14).

11. Amortisseur de vibrations selon la revendication 10, la rondelle élastique (15) prenant appui sur le disque annulaire (11) par l'intermédiaire d'au moins une bague d'écartement (16, 17), qui est disposée entre la rondelle élastique (15) et le disque annulaire (11).

12. Amortisseur de vibrations selon l'une des revendications précédentes, la surface du siège de valve, avec laquelle la valve "blow-off" (4) coopère, étant formée sur le corps du piston moteur (1) et / ou sur le corps du plateau à valves (20).
